# EUROPÄISCHE PATENTSCHRIFT

(11) **EP 3 694 897 B1**
(45) Veröffentlichungstag und Bekanntmachung des Hinweises auf die Patenterteilung: **11.09.2024**
(21) Anmeldenummer: 18786315.4
(22) Anmeldetag: 12.10.2018
(51) Int. Cl.: C08G 18/00, B29C 64/00, C08G 18/81, C08G 18/22

(54) **VERFAHREN ZUR HERSTELLUNG EINES VERNETZBAREN POLYMERS UNTER BILDUNG VON OXAZOLIDINONEN**
METHOD FOR PRODUCING A CROSSLINKABLE POLYMER WITH FORMATION OF OXAZOLIDINONES
PROCÉDÉ DE FABRICATION D'UN POLYMÈRE RÉTICULAIRE POUR FORMER DES OXAZOLIDINONES

(30) Priorität: 13.10.2017 EP 17196378
(43) Veröffentlichungstag der Anmeldung: 19.08.2020
(73) Patentinhaber: Stratasys, Inc., Eden Prairie, MN 55344 (US)
(72) Erfinder: ACHTEN, Dirk, 51375 Leverkusen (DE); BÜSGEN, Thomas, 51377 Leverkusen (DE); WAGNER, Roland, 51375 Leverkusen (DE); STEMPFLE, Florian, Johannes, 50825 Köln (DE); TOMCZYK, Christoph, 51379 Leverkusen (DE)
(74) Vertreter: Davepon, Björn
(86) Internationale Anmeldenummer: PCT/EP2018/077874
(87) Internationale Veröffentlichungsnummer: WO 2019/073034

(56) Entgegenhaltungen:
- EP-A2- 0 071 812
- EP-A2- 0 071 812
- US-A- 4 539 218
- US-A- 4 539 218
- US-A- 5 304 612
- US-A- 5 304 612

## Beschreibung

Die vorliegende Erfindung betrifft ein Verfahren zur Herstellung eines Polymers, umfassend die Schritte: A) Abscheiden eines radikalisch vernetzbaren Harzes unter Erhalt eines radikalisch vernetzten Harzes und B) Behandeln des radikalisch vernetzten Harzes bei Bedingungen, die ausreichen, um im radikalisch vernetzten Harz eine von der radikalischen Vernetzung verschiedene chemische Reaktion auszulösen. Die Erfindung betrifft weiterhin ein radikalisch vernetzbares Harz und ein durch das Verfahren erhältliches Polymer.

Oxazolidinone sind weit verbreitete Strukturmotive in der medizinischen Chemie. Eine Cycloaddition von Epoxiden und Isocyanaten ist ein möglicher Weg zum Aufbau der Oxazolidinongruppe in einer Eintopfreaktion. Aus der Reaktion von Polyepoxiden mit Polyisocyanaten lassen sich weiterhin Polyoxazolidinone gewinnen.

Patentanmeldungen betreffend die Herstellung von Polyoxazolidinonen sind unter anderem EP 3 143 060, EP 3 143 059, EP 3 143 065, WO 2016/128380 und EP 2 920 218. WO 2015/173101 (EP 3 143 065) offenbart beispielsweise ein Verfahren zur Herstellung von Oxazolidinonverbindungen, umfassend den Schritt der Reaktion eines Isocyanats mit einem Epoxid in Gegenwart eines Lewis-sauren Katalysators, wobei die Reaktion in Abwesenheit einer Base mit einer Basenstärke pKs von < 5 und bei einer Temperatur von > 150 °C durchgeführt wird. Das Isocyanat wird zum Epoxid kontinuierlich oder schrittweise mit zwei oder mehr individuelle Zugabeschritten hinzugefügt und in jedem individuellen Zugabeschritt ist die Menge des Isocyanats < 50 Gewichts-% der Gesamtmenge an zuzufügendem Isocyanat.

DE 31 30 545 offenbart ein Kunstharz auf der Basis eines epoxidgruppenhaltigen Acrylatcopolymerisats mit einer zahlenmittleren Molmasse von 1000 bis 30000. Das Acrylatcopolymerisat besteht aus a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest, b) 5 bis 40 Gew.-% eines Acrylsäurehydroxyalkyl- und/oder Methacrylsäurehydroxyalkylesters und c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung, wobei die Summe der Komponenten a, b und c 100% beträgt. Die Hydroxylgruppen des Acrylatcopolymerisats sind vor oder nach Durchführung der Copolymerisation mindestens teilweise mit einem teilblockierten Di- und/oder Polyisocyanat umgesetzt worden.

Diese Patentanmeldung führt weiterhin aus, dass die teilblockierten Di- oder Polyisocyanate einerseits im Mittel mindestens eine freie Isocyanatgruppe pro Molekül aufweisen, und andererseits im Mittel mindestens eine Isocyanatgruppe pro Molekül mit dem Blockierungsmittel umgesetzt worden ist. Das Blockierungsmittel wird dabei so gewählt, dass es bei Raumtemperatur eine Reaktion der blockierten Isocyanatgruppen verhindert und bei erhöhter Temperatur abgespalten wird, so dass die Isocyanatgruppe reaktionsfähig wird. Das beanspruchte Kunstharz ist daher bei Raumtemperatur stabil, während die bei erhöhter Temperatur, das heißt beim Einbrennen, freigesetzten Isocyanatgruppen zur Vernetzung des Kunstharzes zur Verfügung stehen. Sie können dann mit den aus der Komponente c stammenden Epoxidgruppen des Acrylatcopolymerisats unter Bildung von Oxazolidinonringen reagieren. Das beanspruchte Kunstharz ist also selbstvernetzend und benötigt keine zusätzliche Härterkomponente.

Im technischen Gebiet der Beschichtungen sind sogenannte "dual cure"-Systeme bekannt, bei denen das flüssig aufgetragene Beschichtungsmaterial zunächst radikalisch, beispielsweise photochemisch, vernetzt wird und anschließend über Reaktionen von NCO-Gruppen mit geeigneten Reaktionspartnern weiter aushärten.

Im Stand der Technik ist bislang nicht beschrieben worden, dass flüssig aufgetragene strahlenhärtbare Harze als zweiten Mechanismus in dual cure-Systemen eine Oxazolidinonbildung aufweisen. Dieses wäre jedoch wünschenswert, um eine weitere Technologieoption verfügbar zu haben.

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein Fertigungsverfahren bereitzustellen, bei dem die herzustellenden Gegenstände oder Beschichtungen oder Klebstoffe möglichst kosteneffizient und/oder individualisiert und/oder ressourcenschonend erhalten werden können.

Erfindungsgemäß gelöst wird die Aufgabe durch ein Verfahren gemäß Anspruch 1, einem Harz gemäß Anspruch 9 und einem Polymer gemäß Anspruch 10. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß vorgeschlagen wird ein Verfahren zur Herstellung eines Polymers, umfassend die Schritte:
A) Abscheiden eines radikalisch vernetzbaren Harzes unter Erhalt eines radikalisch vernetzten Harzes und
B) Behandeln des radikalisch vernetzten Harzes bei Bedingungen, die ausreichen, um im radikalisch vernetzten Harz eine von der radikalischen Vernetzung verschiedene chemische Reaktion auszulösen, wobei das radikalisch vernetzbare Harz eine härtbare Komponente umfasst, in der NCO-Gruppen, olefinische C=C-Doppelbindungen und Epoxidgruppen vorliegen und wobei die von der radikalischen Vernetzung verschiedene chemische Reaktion im radikalisch vernetzten Harz die Reaktion von NCO-Gruppen und Epoxidgruppen zu Oxazolidinongruppen ist.

Im erfindungsgemäßen Verfahren wird somit der Gegenstand in zwei Herstellungsabschnitten erhalten. Der erste Herstellungsabschnitt kann als Aufbauabschnitt angesehen werden. Der zweite Herstellungsabschnitt kann als Härtungsabschnitt angesehen werden.

Im Kontext der vorliegenden Erfindung werden die Begriffe "radikalisch vernetzbares Harz" und "radikalisch vernetztes Harz" benutzt. Hierbei wird das radikalisch vernetzbare Harz durch das Belichten und/oder Bestrahlen, welches radikalische Vernetzungsreaktionen auslöst, in das radikalisch vernetzte Harz überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das radikalisch vernetzbare Harz kann eine Viskosität (23 °C, DIN EN ISO 2884-1) von ≥ 5 mPas bis ≤ 100000 mPas aufweisen. Somit ist es als flüssiges Harz anzusehen. Vorzugsweise beträgt die Viskosität ≥ 50 mPas bis ≤ 10000 mPas, mehr bevorzugt ≥ 200 mPas bis ≤ 5000 mPas.

Neben der härtbaren Komponente kann das radikalisch vernetzbare Harz auch eine nicht härtbare Komponente umfassen, in der beispielsweise Stabilisatoren, Füllstoffe, insbesondere strahlungstransparente Füllstoffe wie Glasfasern, Glaskugeln, Silika und dergleichen zusammengefasst sind. Das radikalisch vernetzbare Harz kann somit weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 80 Gew.-%, vorzugsweise weniger als 60 Gew.-%, besonders bevorzugt bis zu 40 Gew.-%, und ganz besonders bevorzugt bis zu höchstens 20% bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Harzes vor.

Geeignete Füllstoffe neben transparenten Füllstoffen, die eine inhärente Transparenz gegenüber der eingestrahlten radikalische Polymerisationsprozesse induzierenden Strahlung aufweisen wie Gläser (in Form von Kugeln, Hohlkugeln, faserigen Füllstoffe, etc. enthaltend SiO₂) oder transparente Polymere wie z.B. vinylische Polymerisate, Polycarbonate und Polyester sind beispielsweise auch bevorzugt Füllstoffe, die aufgrund ihrer kleinen mittleren Teilchengröße ein ausreichende optische Transparenz ermöglichen um radikalische Polymerisationsprozesse in den gewünschten Schichtdicken nicht quantitativ zu unterbinden, wobei mittlere Teilchengrößen mit einer Teilchengröße kleiner der Wellenlänge des eingestrahlten Wellenlänge der radikalische Polymerisationsprozesse induzierenden Strahlung aufweisen bevorzugt sind sowie in geringeren Konzentrationen von maximal 20 Gewichtsprozent, bevorzugt maximal 10 Gewichtsprozent, besonders bevorzugt maximal 5 Gewichtsprozent, allgemeine reflektierende und nicht inhärent strahlungsdurchlässe Füllstoffe wie AlOH₃, CaCO₃, Al₂O₃, Metallpigmente wie TiO₂ und weitere bekannte übliche Füllstoffe. Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-(3-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxy-benzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Harz vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Harzes, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3 -(3,5 -di-tert-butyl-4-hydroxy-phenyl)-propionat), Octadecyl-3 -(3,5-di-tert-butyl-4-hydroxyphenyl)-propionat, Triethylen-glykol-bis(3 -tert-butyl-4-hydroxy-5 - methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Harze, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

Ausführungsformen und weitere Aspekte der vorliegenden Erfindung werden im Folgenden erläutert. Sie können beliebig miteinander kombiniert werden, sofern sich aus dem Kontext nicht eindeutig das Gegenteil ergibt.

In einer bevorzugten Ausführungsform umfasst die härtbare Komponente eine härtbare Verbindung, welche Epoxidgruppen und olefinische C=C-Doppelbindungen aufweist. Bei dieser Verbindung kann es sich um epoxyfunktionelles Acrylat oder Methacrylat handeln. Verbindungen dieser Stoffklasse können aus der Reaktion von Polyepoxiden mit Hydroxyalkyl(meth)acrylaten erhalten werden, wobei die Stöchiometrie der Edukte so gewählt wird, dass das Hydroxyalkyl(meth)acrylat im Unterschuss vorliegt und somit noch nicht reagierte Epoxygruppen im Produkt verbleiben. Hierfür geeignete Polyepoxide sind zum Beispiel die isomeren Bis[4-(glycidyloxy)phenyl]methane, 1,3-Butadiendiepoxid, 1,4-Butandioldiglycidylether, die isomeren 1,4-Cyclohexandimethanoldiglycidylether, die isomeren Dicyclopentadiendioxide, 1,2,5,6-Diepoxycyclooctan, 1,2,7,8-Diepoxyoctan, Diglycidyl-1,2-cyclohexandicarboxylat, N,N-Diglycidyl-4-glycidyloxyanilin, 3,4-Epoxycyclohexylmethyl-3,4-epoxycyclohexancarboxylat, Glycerindiglycidylether, Diglycidylether, Poly(ethylenglycol)diglycidylether, Poly(propylenglycol)diglycidylether, 4,4'-Methylenbis(N,N-diglycidylanilin), Neopentylglycoldiglycidylether, Resorcinoldiglycidylether, Tetraphenylolethanglycidylether, Tris(2,3-epoxypropyl)isocyanurat, Tris(4-hydroxyphenyl)methantriglycidylether, Trimethylolpropantriglycidylether, oder eine Kombination aus mindestens zwei hiervon.

Im Interesse eines möglichst niedrigen Dampfdrucks sind Poly(ethylenglycol)diglycidylether, Poly(propylenglycol)diglycidylether und deren von mindestens trifunktionellen Startern abgeleitete höhere Derivate bevorzugt.

Geeignete Hydroxyalkyl(meth)acrylate sind zum Beispiel 2-Hydroxyethylacrylat, 2-Hydroalkylmethacrylat, 3-Hydroxypropylacrylat, 3-Hydroxypropylmethacrylat, 4-Hydroxybutylacrylat, 4-Hydroxybutylmethacrylat oder eine Kombination aus mindestens zwei hiervon.

Geeignete Polyisocyanate für die Reaktion in Schritt B) dieser Ausführungsform des erfindungsgemäßen Verfahrens sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5 -trimethyl-5 -isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Ferner können erfindungsgemäß auch aliphatische und/oder aromatische Isocyanat-Endgruppen tragende Prepolymere, wie beispielsweise aliphatische oder aromatische Isocyanat-Endgruppen tragende Polyether-, Polyester-, Polyacrylat, Polyepoxyd oder Polycarbonat-Prepolymere eingesetzt werden. Im Interesse eines niedrigen Dampfdrucks sind NCO-terminierte Prepolymere bevorzugt.

Die Reaktionen der Verbindung im erfindungsgemäßen Verfahren sind nachfolgend schematisch und beispielhaft dargestellt. Die epoxy- und methacrylatfunktionelle Verbindung weist eine Gruppe R¹ auf, welche die Epoxidgruppe und die Methacrylatgruppe miteinander verbindet. R¹ kann wiederum ebenfalls noch weitere Epoxygruppen und/oder (Meth)acrylatgruppen tragen. In Schritt A) des erfindungsgemäßen Verfahrens erfolgt eine photochemische Vernetzung zu einem epoxyfunktionellen Polymer. Anschließend reagiert ein bereits anwesendes Isocyanat R²-NCO mit den Epoxidgruppen zu Oxazolidinongruppen. R² kann weitere NCO-Gruppen tragen, so dass es sich um ein Polyisocyanat handeln kann.

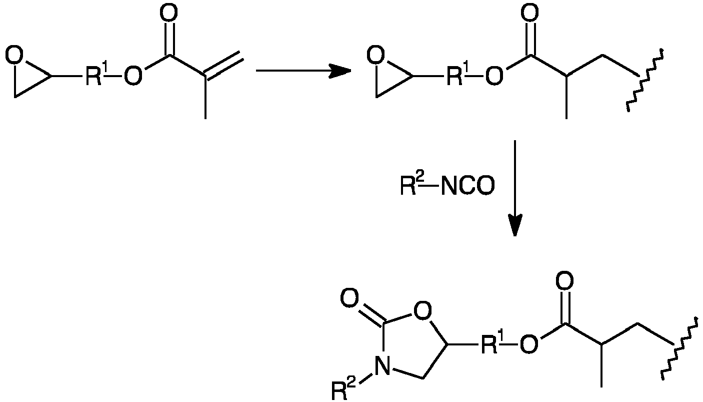

In einer weiteren bevorzugten Ausführungsform umfasst die härtbare Komponente eine härtbare Verbindung, welche NCO-Gruppen und olefinische C=C-Doppelbindungen aufweist. Bei dieser Verbindung kann es sich um NCO-funktionelles Acrylat oder Methacrylat handeln. Verbindungen dieser Stoffklasse können aus der Reaktion von Polyisocanaten mit Hydroxyalkyl(meth)acrylaten erhalten werden, wobei die Stöchiometrie der Edukte so gewählt wird, dass das Hydroxyalkyl(meth)acrylat im Unterschuss vorliegt und somit noch nicht reagierte NCO-Gruppen im Produkt verbleiben.

Geeignete Hydroxyalkyl(meth)acrylate sind zum Beispiel 2-Hydroxyethylacrylat, 2-Hydroalkylmethacrylat, 3-Hydroxypropylacrylat, 3-Hydroxypropylmethacrylat, 4-Hydroxybutylacrylat, 4-Hydroxybutylmethacrylat oder eine Kombination aus mindestens zwei hiervon.

Geeignete Polyisocanate für die Reaktion sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Ferner können erfindungsgemäß auch aliphatische und/oder aromatische Isocyanat-Endgruppen tragende Prepolymere, wie beispielsweise aliphatische oder aromatische Isocyanat-Endgruppen tragende Polyether-, Polyester-, Polyacrylat, Polyepoxyd oder Polycarbonat-Prepolymere eingesetzt werden. Im Interesse eines niedrigen Dampfdrucks sind NCO-terminierte Prepolymere bevorzugt.

Geeignete Polyepoxide für Schritt B) in dieser Ausführungsform des erfindungsgemäßen Verfahrens sind zum Beispiel die isomeren Bis[4-(glycidyloxy)phenyl]methane, 1,3-Butadiendiepoxid, 1,4-Butandioldiglycidylether, die isomeren 1,4-Cyclohexandimethanoldiglycidylether, die isomeren Dicyclopentadiendioxide, 1,2,5,6-Diepoxycyclooctan, 1,2,7,8-Diepoxyoctan, Diglycidyl-1,2-cyclohexandicarboxylat, N,N-Diglycidyl-4-glycidyloxyanilin, 3,4-Epoxycyclohexylmethyl-3,4-epoxycyclohexancarboxylat, Glycerindiglycidylether, Diglycidylether, Poly(ethylenglycol)diglycidylether, Poly(propylenglycol)diglycidylether, 4,4'-Methylenbis(N,N-diglycidylanilin), Neopentylglycoldiglycidylether, Resorcinoldiglycidylether, Tetraphenylolethanglycidylether, Tris(2,3-epoxypropyl)isocyanurat, Tris(4-hydroxyphenyl)methantriglycidylether, Trimethylolpropantriglycidylether, oder eine Kombination aus mindestens zwei hiervon.

Im Interesse eines möglichst niedrigen Dampfdrucks sind Poly(ethylenglycol)diglycidylether, Poly(propylenglycol)diglycidylether und deren von mindestens trifunktionellen Startern abgeleitete höhere Derivate bevorzugt.

Die Reaktionen der Verbindung im erfindungsgemäßen Verfahren sind nachfolgend schematisch und beispielhaft dargestellt. Die NCO- und methacrylatfunktionelle Verbindung weist eine Gruppe R³ auf, welche die NCO-Gruppe und die Methacrylatgruppe miteinander verbindet. R³ kann wiederum ebenfalls noch weitere NCO-Fruppen und/oder (Meth)acrylatgruppen tragen. In Schritt A) des erfindungsgemäßen Verfahrens erfolgt eine photochemische Vernetzung zu einem NCOfunktionellen Polymer. Anschließend reagiert ein bereits anwesendes Epoxid R⁴-(CH-CH₂O) mit den NCO-gruppen zu Oxazolidinongruppen. R⁴ kann weitere Epoxidgruppen tragen, so dass es sich um ein Polyepoxid handeln kann.

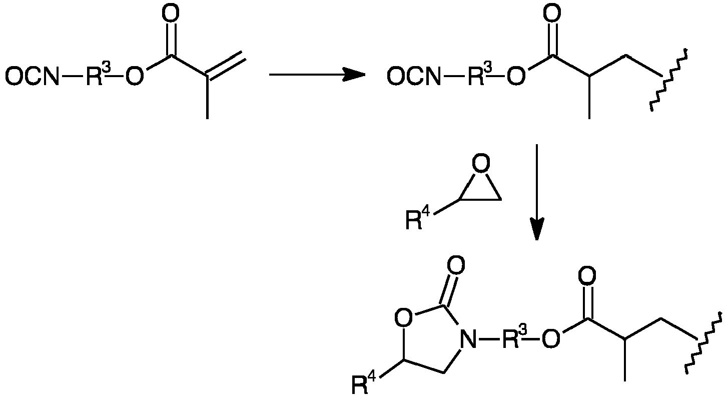

In einer weiteren bevorzugten Ausführungsform umfasst das radikalisch vernetzbare Harz weiterhin einen Radikalstarter und/oder einen Lewis-sauren Katalysator. Um eine unerwünschte Erhöhung der Viskosität des radikalisch vernetzbaren Harzes zu verhindern, können Radikalstarter und/oder Lewis-saurer Katalysator erst unmittelbar vor Beginn des erfindungsgemäßen Verfahrens dem Harz hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise Azobisisobutyronitril (AIBN), Dibenzoylperoxid (DBPO), Di-tert-butylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethylbenzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur^{®}500 (eine Mischung von Benzophenon und (1-Hydroxycyclohexyl)phenylketon, Fa. Ciba, Lampertheim, DE), Irgacure^{®}819 DW (Phenylbis-(2, 4, 6-trimethylbenzoyl)phosphinoxid, Fa. Ciba, Lampertheim, DE) oder Esacure^{®} KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlenquelle haben. Es sind eine Vielzahl von Photoinitiatoren auf dem Markt bekannt. Durch kommerziell verfügbare Photoinitiatoren wird der Wellenlängenbereich im gesamten UV-VIS Spektrum abgedeckt. Photoinitiatoren finden Einsatz bei der Herstellung von Lacken, Druckfarben und Klebstoffen sowie im Dentalbereich.

Im erfindungsgemäßen Verfahren kommt der Photoinitiator im Allgemeinen in einer auf die Menge der eingesetzten härtbaren olefinisch ungesättigte Doppelbindungen tragenden Komponente bezogenen Konzentration von 0,01 bis 6,0 Gew.-%, bevorzugt von 0,05 bis 4,0 Gew.-% und besonders bevorzugt von 0,1 bis 3,0 Gew.-% zum Einsatz.

Im erfindungsgemäßen Verfahren kommt der Lewis-saure Katalysator im Allgemeinen in einer auf die Menge der eingesetzten härtbaren Komponente bezogenen Konzentration von 0,0005 bis 5,0 Gew.-%, bevorzugt von 0,0010 bis 2,0 Gew.-% und besonders bevorzugt von 0,0015 bis 1,0 Gew.-% zum Einsatz.

Ein Beispiel für einen geeigneten Lewis-sauren Katalysator ist ein Katalysator der allgemeinen Formal [M(R1)(R2)(R3)(R4)]⁺ₙ Yⁿ⁻
wobei M für Phosphor oder Antimon steht, (R1), (R2), (R3) und (R4) unabhängig voneinander für lineares oder verzweigtes, gegebenenfalls heteroatomsubstituiertes C₁-C₂₂-Alkyl, C₃-C₂₃-Cycloalkyl, C₁-C₃-verbrückte cycloaliphatische Gruppen mit 3 bis 22 C-Atomen oder (Hetero)Arylgruppen mit 6 bis 18 C-Atomen stehen, Y ein Halogenid-, Carbonat-, Nitrat-, Sulfat- oder Phosphatanion ist und n 1, 2 oder 3 ist.

In einer weiteren bevorzugten Ausführungsform ist der Radikalstarter ausgewählt aus der Gruppe: α-Hydroxyphenylketon, Benzyldimethylketal, 2,4,6-Trimethylbenzoyldiphenylphosphinoxid, Bis-(4-methoxybenzoyl)diethylgerman (Ivocerin^{®}) oder einer Kombination aus mindestens zwei hiervon und/oder der Lewis-saure Katalysator ist ausgewählt aus: [PPh₃{p-C₆H₄(OMe)}]Br, PPh₃{p-C₆H₄(OMe)}]₂(CO₃), [PPh₄]Br, [P(n-Bu)₄]Br, [PPh₃(CH₂-adamantyl)]Br, [PPh₃(cyclohexyl)]Br oder einer Kombination aus mindestens zwei hiervon.

Bevorzugt ist der Lewis-saure Katalysator ausgewählt aus der Gruppe bestehend aus MgCl, LiBr, LiCl und Lithium-Carben oder einer Mischung von mindestens zwei hiervon.

Erfindungsgemäß umfasst das Behandeln des radikalisch vernetzten Harzes bei Bedingungen, die ausreichen, um im radikalisch vernetzten Harz eine von der radikalischen Vernetzung verschiedene chemische Reaktion auszulösen, ein Erwärmen auf eine Temperatur von ≥ 60°C. Vorzugsweise beträgt diese Temperatur ≥ 80 °C bis ≤ 250 °C, mehr bevorzugt ≥ 90 °C bis ≤ 190 °C. Die gewählte Temperatur oder der gewählte Temperaturbereich kann beispielsweise für ≥ 5 Minuten bis ≤ 48 Stunden, bevorzugt ≥ 15 Minuten bis ≤ 24 Stunden und mehr bevorzugt ≥ 1 Stunde bis ≤ 12 Stunden gehalten werden.

In einer weiteren bevorzugten Ausführungsform wird die Oberfläche des nach Schritt A) erhaltenen Vorläufers und/oder des nach Schritt B) erhaltenen Gegenstands mit einer Zerewitinoff-aktive H-Atome aufweisenden Verbindung kontaktiert, wobei als natürliche Luftfeuchtigkeit in der den Vorläufer und/oder den Gegenstand umgebenden Atmosphäre vorkommendes Wasser ausgenommen ist. Bei einer Reaktion von noch freien NCO-Gruppen mit diesen Verbindungen kann eine Funktionalisierung der Oberflächen erreicht werden. Die Zerewitinoff-aktive H-Atome aufweisende Verbindung kann beispielsweise durch Eintauchen, Aufsprühen oder Bestreichen mit der Oberfläche des Vorläufers in Kontakt gebracht werden. Eine weitere Möglichkeit ist die Kontaktierung über die Gasphase, beispielsweise mittels Ammoniak oder Wasserdampf. Optional kann ein Katalysator die Reaktion beschleunigen.

Beispiele für als Funktionalisierungsreagenz geeignete Verbindungen sind Alkohole, Amine, Säuren und ihre Derivate, Epoxide und insbesondere Polyole, wie zum Beispiel Zucker, Polyacrylatpolyole, Polyesterpolyole, Polyetherpolyole, Polyvinylalkohole, Polycarbonatpolyole, Polyethercarbonatpolyole und Polyestercarbonatpolyole, langkettige aliphatische Alkohole, fluorierte oder chlorierte Alkohole. Weitere Beispiele sind Polyacrylsäure, Polyamide, Polysiloxane, Polyacrylamide, Polyvinylpyrrolidone, Polyvinylbutyrat, Polyketone, Polyetherketone, Polyacetale und Polyamine. Auch zur gezielten Ausbildung von Harnstoffen können Amine eingesetzt werden.

Vorzugsweise wird ein langkettiger Alkylalkohol, ein langkettiges (sekundäres) Alkylamin, eine Fettsäure, ein epoxidierter Fettsäureester, ein (per)fluorierter langkettiger Alkohol oder deren Mischungen eingesetzt. "Langkettig" ist hier als ab 6 C-Atomen, vorzugsweise ab 8 C-Atomen, mehr bevorzugt ab 10 C-Atomen in der längsten Kette der Verbindung zu verstehen. Die Herstellung von modifizierten Polyisocyanaten ist prinzipiell bekannt und beispielsweise in EP-A 0 206 059 und EP-A 0 540 985 beschrieben. Sie erfolgt vorzugsweise bei Temperaturen von 40 bis 180 °C.

In einer nicht zur Erfindung gehörenden Ausführungsform wird das radikalisch vernetzbare Harz als Beschichtung auf ein Substrat aufgetragen. Dann kann das Verfahren als Lackierverfahren angesehen werden.

In einer weiteren bevorzugten Ausführungsform wird das radikalisch vernetzbare Harz als Beschichtung auf mindestens ein Substrat aufgetragen und mit mindestens einem weiteren Substrat kontaktiert. Dann kann das erfindungsgemäße Verfahren als Verfahren zur Verklebung von Substraten angesehen werden. In einer bevorzugten Ausführungsform ist dabei mindestens ein Substrat zumindest teiltransparent für die benutzte Strahlung.

Erfindungsgemäß ist das Verfahren ein additives Fertigungsverfahren zur Herstellung eines Gegenstandes aus einem Vorläufer, nach Schritt A) wird der Vorläufer erhalten und nach Schritt B) wird der Gegenstand erhalten.

In einer weiteren bevorzugten Ausführungsform umfasst Schritt A) die Schritte:
I) Abscheiden von radikalisch vernetztem Harz auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Harz auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden des radikalisch vernetzten Harzes wenigstens in Schritt II) durch Belichten und/oder Bestrahlen eines ausgewählten Bereichs des radikalisch vernetzbaren Harzes, entsprechend dem jeweils ausgewählten Querschnitt des Vorläufers, erfolgt.

Weiterhin umfasst in dieser Ausführungsform Schritt B) den Schritt:
IV) Behandeln des nach Schritt III) erhaltenen Vorläufers bei Bedingungen, die ausreichen, um im radikalisch vernetzten Harz des erhaltenen Vorläufers die Reaktion von NCO-Gruppen und Epoxidgruppen zu Oxazolidinongruppen ablaufen zu lassen.

Der Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der Härtungsabschnitt ist Gegenstand des Schritts IV). Hier wird der nach dem Aufbauabschnitt erhaltene Vorläufer oder intermediäre Gegenstand ohne seine Form weiter zu verändern in einen mechanisch dauerhafteren Gegenstand überführt. Das Material, aus dem der Vorläufer im additiven Fertigungsverfahren erhalten wird, wird im Rahmen der vorliegenden Erfindung allgemein auch als "Aufbaumaterial" bezeichnet.

In Schritt I) des Verfahrens erfolgt das Abscheiden eines radikalisch vernetzten Harzes auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden des radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist erfindungsgemäß vorgesehen, dass das Abscheiden eines radikalisch vernetzten Harzes wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Dieses kann sowohl durch selektives Belichten (Stereolithographie, DLP) des Harzes als auch durch selektives Auftragen des Harzes, gefolgt von einem Belichtungsschritt, der aufgrund des vorigen selektiven Auftragens des Harzes nicht mehr selektiv sein muss (Inkjet-Verfahren).

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

In einer weiteren bevorzugten Ausführungsform weist das Verfahren die Merkmale auf:
- der Träger ist innerhalb eines Behälters angeordnet ist und vertikal in Schwerkraftrichtung absenkbar,
- der Behälter enthält das radikalisch vernetzbare Harz in einer Menge, welche ausreicht, um wenigstens den Träger und auf dem Träger abgeschiedenes vernetztes Harz zu bedecken,
- vor jedem Schritt II) wird der Träger um eine vorbestimmte Strecke abgesenkt, so dass über der in vertikaler Richtung gesehen obersten Lage des Aufbaumaterials sich eine Schicht des radikalisch vernetzbaren Harzes bildet und
- in Schritt II) belichtet und/oder bestrahlt ein Energiestrahl den ausgewählten Bereich der Schicht des radikalisch vernetzbaren Harzes, entsprechend dem jeweils ausgewählten Querschnitt des Vorläufers.

Somit wird gemäß dieser Ausführungsform das additive Fertigungsverfahren der Stereolithographie (SLA) abgedeckt. Der Träger kann beispielsweise jeweils um eine vorbestimmte Strecke von ≥ 1 µm bis ≤ 2000 µm abgesenkt werden.

In einer weiteren bevorzugten Ausführungsform weist das Verfahren die Merkmale auf:
- der Träger ist innerhalb eines Behälters angeordnet ist und vertikal entgegen der Schwerkraftrichtung anhebbar,
- der Behälter stellt das radikalisch vernetzbare Harz,
- vor jedem Schritt II) wird der Träger um eine vorbestimmte Strecke angehoben, so dass unter der in vertikaler Richtung gesehen untersten Lage des Aufbaumaterials sich eine Schicht des radikalisch vernetzbaren Harzes bildet und
- in Schritt II) belichtet und/oder bestrahlt eine Mehrzahl von Energiestrahlen gleichzeitig den ausgewählten Bereich der Schicht des radikalisch vernetzbaren Harzes, entsprechend dem jeweils ausgewählten Querschnitt des Vorläufers.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von ≥ 1 µm bis ≤ 2000 µm angehoben werden.

In einer weiteren bevorzugten Ausführungsform wird das radikalisch vernetzbare Harz aus einem oder mehreren Druckköpfen, entsprechend dem jeweils ausgewählten Querschnitt des Vorläufers, aufgetragen und anschließend belichtet und/oder bestrahlt.

Somit wird gemäß dieser Ausführungsform das additive Fertigungsverfahren der Inkjet-Methode abgedeckt: es wird das vernetzbare Harz gegebenenfalls separat von den erfindungsgemäßen Katalysatoren selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des Harzes kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von ≥ 1 µm bis ≤ 2000 µm liegen.

Ein weiterer Aspekt der Erfindung ist ein radikalisch vernetzbares Harz, welches eine härtbare Komponente umfasst, in der NCO-Gruppen, olefinische C=C-Doppelbindungen und Epoxidgruppen vorliegen. Zur Vermeidung von Wiederholungen wird generell auf die Ausführungen zum erfindungsgemäßen Verfahren verwiesen.

In einer nicht zur Erfindung gehörenden Ausführungsform umfasst die härtbare Komponente eine härtbare Verbindung, welche Epoxidgruppen und olefinische C=C-Doppelbindungen aufweist. Bei dieser Verbindung kann es sich um epoxyfunktionelles Acrylat oder Methacrylat handeln. Verbindungen dieser Stoffklasse können aus der Reaktion von Polyepoxiden mit Hydroxyalkyl(meth)acrylaten erhalten werden, wobei die Stöchiometrie der Edukte so gewählt wird, dass das Hydroxyalkyl(meth)acrylat im Unterschuss vorliegt und somit noch nicht reagierte Epoxygruppen im Produkt verbleiben.

Erfindungsgemäß umfasst die härtbare Komponente eine härtbare Verbindung, welche NCO-Gruppen und olefinische C=C-Doppelbindungen aufweist. Bei dieser Verbindung kann es sich um NCO-funktionelles Acrylat oder Methacrylat handeln. Verbindungen dieser Stoffklasse können aus der Reaktion von Polyisocanaten mit Hydroxyalkyl(meth)acrylaten erhalten werden, wobei die Stöchiometrie der Edukte so gewählt wird, dass das Hydroxyalkyl(meth)acrylat im Unterschuss vorliegt und somit noch nicht reagierte NCO-Gruppen im Produkt verbleiben.

Ein besonderer Vorteil, der aus der Verwendung der erfindungsgemäßen Zusammensetzungen und dem erfindungsgemäßen Verfahren für die erfindungsgemäßen Anwendungen entsteht, ist das die Formulierungen im zweistufigen Verfahren nach den Schritten A und B einen geringen Schrumpf damit eine bessere Formstabilität und geringere innere Spannung aufweisen können. Bevorzugt beträgt der Schrumpf der Formulierung nach Schritt A ≤ 7%, bevorzugt ≤ 5%, besonders bevorzugt ≤ 3% und der Schrumpf des Vorläufers aus A nach Schritt B, durch die Umsetzung von Isocyanaten mit Epoxiden zu Oxazolidinonen ≤ 3%, bevorzugt ≤ 2%, besonders bevorzugt ≤ 1,5% und ganz besonders bevorzugt ≤ 1%.

Die Erfindung betrifft ebenfalls ein Polymer, das durch ein erfindungsgemäßes Verfahren erhältlich ist.

In einer nicht zur Erfindung gehörenden Ausführungsform liegt das Polymer als Beschichtung auf einem Substrat und/oder zwischen zwei Substraten vor.

Erfindungsgemäß liegt das Polymer als additiv gefertigter Gegenstand vor.

### Beispiele:

In einem erfindungsgemäßen Verfahren wurde in einem Schritt A) eine Formulierung verwendet, bestehend aus:
100 g eines acrylatfunktionalisierten Isocyanatcyanurats auf Basis Hexamethylendiisocyanat als Reaktionsprodukt des 1,6-HDI-Trimers mit Hydroxyethylacrylat und der folgenden idealisierten Struktur:

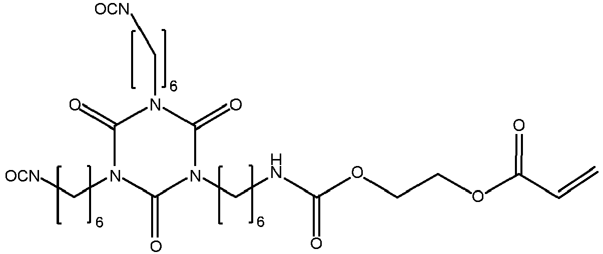

35 g des Diepoxides 1,6-Hexandioldiglycidylether *Denacol* ^{®} *EX-212*, bezogen von der Fa. *Nagase ChemteX.*

1,3 g des Katalysators Lithiumbromid, 1%ig in Butylacetat, beides bezogen von der Fa *Sigma Aldrich.*

27 g Isobornylacrylat bezogen von der Fa *Sigma Aldrich*

0,165 g BBOT: 2,2'-(2,5-thiophenediyl)bis(5-(1,1-dimethylethyl)-benzoxazol; UV-Blocker bezogen von der Fa. *Sigma-Aldrich.*

1,27 g des Photoinitiators *Omnirad BL 750*, bezogen von der Fa. *IGM Resins.*

Die Formulierung wurde in einem Kunststoffbecher mit Deckel mit einem Planetenkreiselmischer Thinky ARE250 bei Raumtemperatur für ca. 2 Minuten bei einer Umdrehungszahl von 2000 Umdrehungen pro Minute gemischt.

Mit der gemischten Formulierung wurden entsprechend Schritt B) des erfindungsgemäßen Verfahrens auf einer DLP-basierten 3D-Druckanlage vom Typ *Ember* des Herstellers *Autodesk* Probenstäbe mit den Abmessungen: 60 x 10 x 2 mm hergestellt. Die Wellenlänge für die Belichtung betrug 405 nm. Die Schichtdicke betrug jeweils 50 µm. Die Belichtungszeit betrug 4 s / Schicht.

Als erfindungsgemäßes Beispiel 1 wurde ein aus der Formulierung hergestellter Probenstab für 60 Minuten bei 190 °C in einem Umlufttrockenschrank erhitzt. Das Vergleichsbeispiel erhielt keine solche thermische Behandlung sondern wurde bei Raumtemperatur, also bei einer Temperatur in einem Bereich von 22 bis 25 °C gehalten.

Um den Effekt der Wärmebehandlung bei 190°C des erfindungsgemäßen Beispiels gegenüber dem Vergleichsbeispiel ohne eine solche Wärmebehandlung zu verifizieren, wurde ein FT-IR Sprektrum mit Hilfe eines FT- IR-Spektrometer (Tensor II) der Fa. *Bruker* erstellt. Dazu wurden jeweils eine Probe des erfindungsgemäßen Beispiels 1 und des Vergleichsbeispiels charakterisiert. Es wurde der jeweilige Probenfilm auf die Platinum-ATR-Einheit kontaktiert. Die kontaktierte Fläche der Probe betrug 2 x 2 mm. Bei einer FT-IR Messung dringt die IR-Strahlung je nach Wellenzahl ca. 3 bis 4 µm in die Probe ein. Von der Probe wurde so ein Absorptionsspektrum erstellt. Um eine ungleichmäßige Kontaktierung der unterschiedlich harten Proben zu kompensieren, wurde an allen Spektren eine Grundlinienkorrektur durchgeführt und eine Normierung im Wellenzahlbereich 2600-3200 (CH2, CH3) vorgenommen. Die Interpolation der Epoxid-Gruppe wurde im Wellenzahlbereich 897 bis 921 durchgeführt, die Bildung von Oxazolidinon wurde im Wellenzahlenbereich von 1743 bis 1768 detektiert. Um den Einfluss anderer chemischer Gruppen zu minimieren, wurden die Spektren unter den Graphen in den genannten Wellenzahlbereichen jeweils bis zur Grundlinie integriert und diese Flächen voneinander anschließend subtrahiert. Auf diese Weise konnte eine Bestimmung der chemischen Reaktion der eingesetzten Epoxide mit Isocyanat zu Oxazolidinon nachgewiesen werden, da die Spektren in verschiedenen Wellanzahlbereichen unterschiedliche Peakhöhen aufweisen, was ein Nachweis der Umsetzung der jeweiligen reaktiven Gruppen darstellt:
Für den Wellenzahlbereich 897 bis 921 der Epoxidgruppe ergab sich ein Unterschied der Peakflächen von 4,6;
Für den Wellenzahlbereich 1743 bis 1768 der Oxazolidinongruppe ergab sich ein Unterschied der Peakflächen von 2,8.

Hieraus wird ersichtlich, dass während der thermischen Nachbehandlung die Epoxidgruppen mit Isocyanaten zu Oxazolidinonen reagieren und so die Polymerketten miteinander vernetzen.

An den Proben des erfindungsgemäßen Beispiels und des Vergleichsbeispiels wurden Härtemessungen nach Martens nach DIN EN ISO 14577 mit einem Mikrohärtemessgerät *Fischerscope H100C* der Fa. *Fischer* durchgeführt. Dabei drang ein pyramidenförmiger Diamant in die Filmoberfläche ein und der Härtewert wurde damit bestimmt.

Der erfindungsgemäße, thermisch bei 190 °C behandelte Probenkörper wies eine Martenshärte von 108,6 N/mm², der nicht thermisch, also bei RT aufbewahrte Probenkörper gemäß des Vergleichsbeispiels wies eine Martenshärte von 0,3 N/mm² auf.

Diese starke Erhöhung der Martenshärte weißt wiederum auf eine Vernetzung zwischen Epoxid und Isocyanatgruppen hin. Somit konnte ein Effekt der erfindungsgemäß behandelten Probekörper gegenüber den nicht erfindungsgemäß behandelten Probekörpern (Vergleichsversuch) nachgewiesen werden.

## Patentansprüche

1. Verfahren zur Herstellung eines Polymers, umfassend die Schritte:
A) Abscheiden eines radikalisch vernetzbaren Harzes unter Erhalt eines radikalisch vernetzten Harzes und
B) Behandeln des radikalisch vernetzten Harzes bei Bedingungen, die ausreichen, um im radikalisch vernetzten Harz eine von der radikalischen Vernetzung verschiedene chemische Reaktion auszulösen,
**dadurch gekennzeichnet, dass**
das radikalisch vernetzbare Harz eine härtbare Komponente umfasst, in der NCO-Gruppen, olefinische C=C-Doppelbindungen und Epoxidgruppen vorliegen,
die von der radikalischen Vernetzung verschiedene chemische Reaktion im radikalisch vernetzten Harz die Reaktion von NCO-Gruppen und Epoxidgruppen zu Oxazolidinongruppen ist,
das Behandeln des radikalisch vernetzten Harzes bei Bedingungen, die ausreichen, um im radikalisch vernetzten Harz eine von der radikalischen Vernetzung verschiedene chemische Reaktion auszulösen, ein Erwärmen auf eine Temperatur von ≥ 60°C umfasst und
das Verfahren ein additives Fertigungsverfahren zur Herstellung eines Gegenstandes aus einem Vorläufer ist, nach Schritt A) der Vorläufer erhalten wird und nach Schritt B) der Gegenstand erhalten wird.

2. Verfahren gemäß Anspruch 1, **dadurch gekennzeichnet, dass** die härtbare Komponente eine härtbare Verbindung umfasst, welche Epoxidgruppen und olefinische C=C-Doppelbindungen aufweist.

3. Verfahren gemäß Anspruch 1 oder 2, **dadurch gekennzeichnet, dass** die härtbare Komponente eine härtbare Verbindung umfasst, welche NCO-Gruppen und olefinische C=C-Doppelbindungen aufweist.

4. Verfahren gemäß einem der Ansprüche 1 bis 3, **dadurch gekennzeichnet, dass** das radikalisch vernetzbare Harz weiterhin einen Radikalstarter und/oder einen Lewis-sauren Katalysator umfasst.

5. Verfahren gemäß einem der Ansprüche 1 bis 4, **dadurch gekennzeichnet, dass** Schritt A) die Schritte umfasst:
I) Abscheiden von radikalisch vernetztem Harz auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Harz auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden des radikalisch vernetzten Harzes wenigstens in Schritt II) durch Belichten und/oder Bestrahlen eines ausgewählten Bereichs des radikalisch vernetzbaren Harzes, entsprechend dem jeweils ausgewählten Querschnitt des Vorläufers, erfolgt und
dass Schritt B) den Schritt umfasst:
IV) Behandeln des nach Schritt III) erhaltenen Vorläufers bei Bedingungen, die ausreichen, um im radikalisch vernetzten Harz des erhaltenen Vorläufers die Reaktion von NCO-Gruppen und Epoxidgruppen zu Oxazolidinongruppen ablaufen zu lassen.

6. Verfahren gemäß Anspruch 5, **dadurch gekennzeichnet, dass**:
- der Träger innerhalb eines Behälters angeordnet ist und vertikal in Schwerkraftrichtung absenkbar ist,
- der Behälter das radikalisch vernetzbare Harz in einer Menge enthält, welche ausreicht, um wenigstens den Träger und auf dem Träger abgeschiedenes vernetztes Harz zu bedecken,
- vor jedem Schritt II) der Träger um eine vorbestimmte Strecke abgesenkt wird, so dass über der in vertikaler Richtung gesehen obersten Lage des Aufbaumaterials sich eine Schicht des radikalisch vernetzbaren Harzes bildet und
- in Schritt II) ein Energiestrahl den ausgewählten Bereich der Schicht des radikalisch vernetzbaren Harzes, entsprechend dem jeweils ausgewählten Querschnitt des Vorläufers, belichtet und/oder bestrahlt.

7. Verfahren gemäß Anspruch 5, **dadurch gekennzeichnet, dass**:
- der Träger innerhalb eines Behälters angeordnet ist und vertikal entgegen der Schwerkraftrichtung anhebbar ist,
- der Behälter das radikalisch vernetzbare Harz bereitstellt,
- vor jedem Schritt 11) der Träger um eine vorbestimmte Strecke angehoben wird, so dass unter der in vertikaler Richtung gesehen untersten Lage des Aufbaumaterials sich eine Schicht des radikalisch vernetzbaren Harzes bildet und
- in Schritt II) eine Mehrzahl von Energiestrahlen den ausgewählten Bereich der Schicht des radikalisch vernetzbaren Harzes, entsprechend dem jeweils ausgewählten Querschnitt des Vorläufers, gleichzeitig belichtet und/oder bestrahlt.

8. Verfahren gemäß Anspruch 5, **dadurch gekennzeichnet, dass**:
- in Schritt II) das radikalisch vernetzbare Harz aus einem oder mehreren Druckköpfen, entsprechend dem jeweils ausgewählten Querschnitt des Vorläufers, aufgetragen wird und anschließend belichtet und/oder bestrahlt wird.

9. Radikalisch vernetzbares Harz, **dadurch gekennzeichnet, dass** das Harz eine härtbare Komponente umfasst, in der Epoxidgruppen und eine härtbare Verbindung, welche NCO-Gruppen und olefinische C=C-Doppelbindungen aufweist, vorliegen.

10. Polymer, erhältlich durch ein Verfahren gemäß einem der Ansprüche 1 bis 8, **dadurch gekennzeichnet, dass** das Polymer als additiv gefertigter Gegenstand vorliegt.

## Claims

1. Process for producing a polymer, comprising the steps of:
A) depositing a free-radically crosslinkable resin to obtain a free-radically crosslinked resin and
B) treating the free-radically crosslinked resin under conditions sufficient to trigger a chemical reaction different than free-radical crosslinking in the free-radically crosslinked resin,
**characterized in that**
the free-radically crosslinkable resin comprises a curable component in which NCO groups, olefinic C=C double bonds and epoxide groups are present,
the chemical reaction in the free-radically crosslinked resin different than free-radical crosslinking is the reaction of NCO groups and epoxide groups to form oxazolidinone groups,
the treating of the free-radically crosslinked resin under conditions sufficient to trigger a chemical reaction different than free-radical crosslinking in the free-radically crosslinked resin comprises heating to a temperature of ≥ 60°C, and
the process is an additive production process for producing an object from a precursor, with the precursor being obtained in step A) and the object being obtained in step B).

2. Process according to Claim 1, **characterized in that** the curable component comprises a curable compound that has epoxide groups and olefinic C=C double bonds.

3. Process according to Claim 1 or 2, **characterized in that** the curable component comprises a curable compound that has NCO groups and olefinic C=C double bonds.

4. Process according to any of Claims 1 to 3, **characterized in that** the free-radically crosslinkable resin further comprises a free-radical initiator and/or a Lewis acid catalyst.

5. Process according to any of Claims 1 to 4, **characterized in that** step A) comprises the steps of:
I) depositing free-radically crosslinked resin on a carrier so as to obtain a ply of build material joined to the carrier that corresponds to a first selected cross section of the precursor;
II) depositing free-radically crosslinked resin onto a previously applied ply of the build material to obtain a further ply of the build material that corresponds to a further selected cross section of the precursor and that is joined to the previously applied ply;
III) repeating step II) until the precursor is formed;
wherein the depositing of the free-radically crosslinked resin at least in step II) is achieved by exposure and/or irradiation of a selected region of the free-radically crosslinkable resin corresponding to the respectively
selected cross section of the precursor and
step B) comprises the step of:
IV) treating the precursor obtained in step III) under conditions sufficient for reaction, in the free-radically crosslinked resin of the precursor obtained, of NCO groups and epoxide groups to form oxazolidinone groups.

6. Process according to Claim 5, **characterized in that**:
- the carrier is positioned inside a container and can be lowered vertically in the direction of gravity,
- the container contains the free-radically crosslinkable resin in an amount sufficient to cover at least the carrier and crosslinked resin deposited on the carrier,
- before each step II) the carrier is lowered by a predetermined distance so that a layer of the free-radically crosslinkable resin forms above the uppermost ply of the build material viewed in the vertical direction, and
- in step II) an energy beam exposes and/or irradiates the selected region of the layer of the free-radically crosslinkable resin corresponding to the respectively selected cross section of the precursor.

7. Process according to Claim 5, **characterized in that**:
- the carrier is positioned inside a container and can be raised vertically counter to the direction of gravity,
- the container provides the free-radically crosslinkable resin,
- before each step II) the carrier is raised by a predetermined distance so that a layer of the free-radically crosslinkable resin forms below the lowermost ply of the build material viewed in the vertical direction, and
- in step II) a multiplicity of energy beams simultaneously exposes and/or irradiates the selected region of the layer of the free-radically crosslinkable resin corresponding to the respectively selected cross section of the precursor.

8. Process according to Claim 5, **characterized in that**:
- in step II) the free-radically crosslinkable resin is applied from one or more print heads in accordance with the respectively selected cross section of the precursor and is subsequently exposed and/or irradiated.

9. Free-radically crosslinkable resin, **characterized in that** the resin comprises a curable component in which epoxide groups and a curable compound that has NCO groups and olefinic C=C double bonds is present.

10. Polymer obtainable by a process according to any of Claims 1 to 8, **characterized in that** the polymer is present as an additively produced object.

## Revendications

1. Procédé de préparation d'un polymère, comprenant les étapes :
A) dépôt d'une résine réticulable par voie radicalaire avec obtention d'une résine réticulée par voie radicalaire et
B) traitement de la résine réticulée par voie radicalaire à des conditions qui suffisent pour déclencher, dans la résine réticulée par voie radicalaire, une réaction chimique différente de la réticulation par voie radicalaire,
**caractérisé en ce que** la résine réticulable par voie radicalaire comprend un composant durcissable présentant des groupes NCO, des doubles liaisons oléfiniques C=C et des groupes époxyde,
la réaction chimique différente de la réticulation par voie radicalaire dans la résine réticulée par voie radicalaire est la réaction de groupe NCO et de groupes époxyde en groupes oxazolidinone,
le traitement de la résine réticulée par voie radicalaire à des conditions qui suffisent pour déclencher, dans la résine réticulée par voie radicalaire, une réaction chimique différente de la réticulation par voie radicalaire comprend le chauffage à une température ≥ 60°C et
le procédé est un procédé de fabrication additive pour la fabrication d'un objet à partir d'un précurseur, le précurseur étant obtenu après l'étape A) et l'objet étant obtenu après l'étape B).

2. Procédé selon la revendication 1, **caractérisé en ce que** le composant durcissable comprend un composé durcissable qui présente des groupes époxyde et des doubles liaisons oléfiniques C=C.

3. Procédé selon la revendication 1 ou 2, **caractérisé en ce que** le composant durcissable comprend un composé durcissable qui présente des groupes NCO et des doubles liaisons oléfiniques C=C.

4. Procédé selon l'une des revendications 1 à 3, **caractérisé en ce que** la résine réticulable par voie radicalaire comprend en outre un initiateur radicalaire et/ou un catalyseur acide de Lewis.

5. Procédé selon l'une des revendications 1 à 4, **caractérisé en ce que** l'étape A) comprend les étapes :
I) dépôt d'une résine réticulée par voie radicalaire sur un support, de manière à obtenir une couche d'un matériau constitutif lié au support, laquelle couche correspond à une première section transversale sélectionnée du précurseur ;
II) dépôt d'une résine réticulée par voie radicalaire sur une couche appliquée au préalable du matériau constitutif de manière à obtenir une autre couche du matériau constitutif qui correspond à une autre section transversale sélectionnée du précurseur et qui est liée à la couche appliquée au préalable ;
III) répétition de l'étape II) jusqu'à ce que le précurseur soit formé ;
le dépôt de la résine réticulée par voie radicalaire dans l'étape II) étant effectué par éclairage et/ou irradiation d'une zone sélectionnée de la résine réticulable par voie radicalaire, conformément à la section transversale respective sélectionnée du précurseur et l'étape B) comprend l'étape :
IV) traitement du précurseur obtenu après l'étape III) dans des conditions qui suffisent pour que la réaction de groupes NCO et de groupes époxyde en groupes oxazolidinone se déroule dans la résine réticulée par voie radicalaire du précurseur obtenu.

6. Procédé selon la revendication 5, **caractérisé en ce que**
- le support est disposé dans un récipient et peut être abaissé verticalement dans le sens de la gravité,
- le récipient contient la résine réticulable par voie radicalaire en une quantité qui suffit pour recouvrir au moins le support et la résine réticulée déposée sur le support,
- avant chaque étape II), le support est abaissé d'une distance définie, de telle sorte qu'une couche de la résine réticulable par voie radicalaire se forme sur la couche supérieure du matériau constitutif, vu dans la direction verticale et
- dans l'étape II), un rayon d'énergie éclaire et/ou irradie la zone sélectionnée de la couche de la résine réticulable par voie radicalaire, conformément à la section transversale respective sélectionnée du précurseur.

7. Procédé selon la revendication 5, **caractérisé en ce que**
- le support est disposé dans un récipient et peut être soulevé verticalement à l'opposé du sens de la gravité,
- le récipient met à disposition la résine réticulable par voie radicalaire,
- avant chaque étape II), le support est soulevé d'une distance définie, de telle sorte qu'une couche de la résine réticulable par voie radicalaire se formant sous la couche inférieure du matériau constitutif, vu dans la direction verticale et
- dans l'étape II), une multitude de rayons énergétiques éclairent et/ou irradient simultanément la zone sélectionnée de la couche de la résine réticulable par voie radicalaire, conformément à la section transversale respective sélectionnée du précurseur.

8. Procédé selon la revendication 5, **caractérisé en ce que**
- dans l'étape II), la résine réticulable par voie radicalaire est appliquée à partir d'une ou de plusieurs têtes d'impression, conformément à la section transversale respective sélectionnée du précurseur et est ensuite éclairée et/ou irradiée.

9. Résine réticulable par voie radicalaire, **caractérisée en ce que** la résine comprend un composant durcissable, présentant des groupes époxyde et un composé durcissable, qui présente des groupes NCO et des doubles liaisons oléfiniques C=C.

10. Polymère, pouvant être obtenu par un procédé selon l'une des revendications 1 à 8, **caractérisé en ce que** le polymère se trouve sous forme d'objet fabriqué par voie additive.
